# EUROPÄISCHE PATENTANMELDUNG

(11) **EP 4 717 522 A2**
(43) Veröffentlichungstag der Anmeldung: **01.04.2026**
(21) Anmeldenummer: 26155267.3
(22) Anmeldetag: 21.06.2024
(51) Int. Cl.: B60P 7/08

(54) **SCHIENENSYSTEM MIT ANKERELEMENT**

(30) Priorität: 22.06.2023 DE 102023116445
(62) Teilanmeldung aus: 24183585.9
(71) Anmelder: allsafe GmbH & Co. KG, 78234 Engen (DE)
(72) Erfinder: FUGEL, Thomas, 78234 Engen (DE)
(74) Vertreter: Patentanwälte und Rechtsanwalt Weiß, Arat & Partner mbB

(57) **Zusammenfassung**

Die vorliegende Erfindung betrifft Schienensystem zumindest zum Anordnen von Ladungssicherungselementen in Fahrzeugen, insbesondere Kühlfahrzeugen, wobei die Fahrzeuge zumindest ein Paneel aufweisen, wobei das Schienensystem wenigstens zwei Schienen aufweisend jeweils eine Systemfräsung zumindest mit einer sich in Schienenlängsrichtung erstreckenden hinterschnittenen Schienenlängsnut, sowie ein sich zumindest abschnittweise entlang der Schienenlängsachse erstreckendes Ankerelement wenigstens zur Aufnahme von zumindest im Wesentlichen orthogonal zu einer Schienenlängsachse verlaufenden Kräften, insbesondere Querkräften, zumindest während der Nutzung von Last tragenden Ladungssicherungselementen und zwei Endkappen, wobei jeweils eine der Endkappen an einem distalen Ende des Schienensystems bzw. der Schienen angeordnet ist. Das Schienensystem umfasst zudem ein Ankerelement, wobei das Ankerelement ein mit den Schienen einteilig bzw. einstückig verbundenes Ankerelement ist, welches sich zumindest abschnittweise entlang der Schienenlängsachse sowie in einer sich zur Schienenlängsachse im Wesentlichen orthogonalen Richtung sowie über beide Schienen des Schienensystems erstreckt, wobei das Ankerelement zwei Ankerabschnitte aufweist, wobei jeder Ankerabschnitt derart an der Außenseite des Schienengrundes der jeweiligen Schiene ausgebildet ist, dass zwischen den Ankerabschnitten und einer Schienengrundfläche bzw. der inneren Oberfläche eines Schienenverbindungsabschnittes ein Schaumaufnahmeraum ausgebildet ist. Ferner betrifft die Erfindung ein Paneel mit einem entsprechenden Schienensystem.

## Beschreibung

Die vorliegende Erfindung betrifft ein Schienensystem zumindest zum Anordnen von Ladungssicherungselementen in Fahrzeugen sowie ein Paneel mit einem entsprechenden Schienensystem.

### STAND DER TECHNIK

Ein Paneel für einen Kofferaufbau mit einer Schiene zum Befestigen von Zusatzeinrichtungen ist in der EP 2 116 448 B1 beschrieben. Das offenbarte Paneel weist wenigstens eine Schiene zum Befestigen von Zusatzeinrichtungen eines Kofferaufbaus auf, wobei die Schiene mittels eines Klebstoffs über eine stoffschlüssige Verbindung an dem Paneel fixiert ist. Im Zusammenhang mit der Befestigung der Schiene an der inneren Decklage des Paneels kann die inneren Decklage des Paneels nach innen umgebogene Stege aufweisen, wobei die Schiene über die nach innen umgebogenen Stege an dem Paneel fixiert ist. Dies erfordert einen präzisen Prozess beim Prägen der Deckschicht sowie stabile umgebogene Stege, um ein prozesssicheres Halten der Schiene zu ermöglichen. Dabei definieren die nach innen umgebogenen Stege mit ihren freien Enden oder Rändern eine längs zur Schiene verlaufende Öffnung in der inneren Decklage, in der die Schiene angeordnet ist. Damit ein Austreten des Schaumes beim Ausschäumvorgang verhindert wird, bedarf es der zusätzlichen Anordnung von Abschlusselementen an den Schienenenden, die wiederum mit der Schiene kraft- und/oder formschlüssig verbunden und passgenau angeordnet werden müssen.

Ein weiteres Paneel bzw. ein Strukturelement mit einer sich an dem Strukturelement abstützenden Funktionsschiene ist in der EP 4 059 775 A1 beschrieben. Das Strukturelement weist eine sich senkrecht zum Ladeboden des Aufbaus erstreckende und zum Laderaum hin offene Aufnahme auf, in welcher die Funktionsschiene aufgenommen und mit der Aufnahme verklebt ist. Die Funktionsschiene weist zudem einen Klemmsteg auf, der derart klemmend in Anlage an der Aufnahme anliegt, dass die Funktionsschiene gegenüber einem Auszug aus der Aufnahme in Richtung des Laderaumes abgesichert ist. Zur Herstellung einer entsprechenden Aufnahme zum Anordnen dieser Klemmstege bedarf es jedoch einer tiefen Prägung mit hinreichend tiefen Prägekanten, sodass unkontrollierte Risse im Blech durch entsprechende Freischnitte verhindert werden müssen, was wiederum zur Folge hat, dass die freigeschnitten Blechabschnitte den Prozess des Ausschäumens erschweren und ggf. aufgrund Austrittstellen des Schaumes sogar unmöglich machen.

In der EP 2 116 420 A1 ist ein Kofferaufbau mit einem Paneel beschrieben, wobei das Paneel eine Befestigungseinrichtung zum Befestigen von Zusatzeinrichtungen des Kofferaufbaus umfasst. Die in einer Öffnung einer inneren Decklage des Paneels vorgesehene Befestigungseinrichtung umfasst ein zur Innenseite des Paneels geöffnetes Schienenelement sowie ein separates mit dem Schienenelement verbundenes Versteifungsprofil, welches im Kernbereich des Paneels angeordnet ist. Die hier beschriebene zweiteilige Ausgestaltung erfordert die Montage von zwei separaten Bauteilen, nämlich dem Schienenelement mit dem Versteifungsprofil. Diese Montage erfordert einen entsprechenden zeitlichen Aufwand und die Passgenauigkeit beider Bauteile, ist demnach also einer sehr geringen Fehlertoleranz unterworfen. Derartige Montagen sind bekanntermaßen auch kostenintensiv, wobei die Zweiteiligkeit zudem auch die Fehleranfälligkeit der gesamten Befestigungseinrichtung und folglich des Paneels erhöht.

Die DE 33 16 412 A1 offenbart eine transportierbare Kabine in Sandwichbauweise mit Innenwandstringer, welche jeweils aus zwei separaten Strangpressprofilen bestehen, die mit einem Schnappverbund formschlüssig zusammengesetzt werden. Die hier beschriebene zweiteilige Ausgestaltung erfordert die Montage von zwei separaten Strangpressprofilen, wodurch wiederum ein entsprechender zeitlichen Montageaufwand und die Passgenauigkeit beider Bauteile erforderlich sind, um eine prozesssichere Ausgestaltung der Kabine zu ermöglichen. Derartige Montagen sind bekanntermaßen zeit- und kostenintensiv, wobei die Zweiteiligkeit zudem auch die Fehleranfälligkeit der gesamten Innenwandstringer und folglich der Kabine erhöht.

### OFFENBARUNG DER ERFINDUNG

Es ist daher die Aufgabe der vorliegenden Erfindung, die voranstehend beschriebenen Nachteile bei einer innerhalb eines Paneels angeordneten, insbesondere eingeschäumten Schiene zumindest teilweise zu beheben. Insbesondere ist es die Aufgabe der vorliegenden Erfindung ein Schienensystem zur Verfügung zu stellen, dank welchem eine Innendeckschicht eines Paneels ohne einen Freischnitt an den Außenkanten der Prägung zur Erzeugung einer Schienenaufnahmeöffnung geprägt werden kann. Ferner ist es die Aufgabe der Erfindung ein Paneel zur Verfügung zu stellen, bei welchem die Prägekanten nicht einreißen und bei welchem die Oberfläche der in das Paneel zumindest abschnittsweise eingebrachten Schiene bündig mit einer nicht geprägten Innendeckschichtoberfläche des Paneels abschließt. Zudem soll dabei die Herstellung der Schiene bzw. des Schienensystems sowie des Paneels mit dem Schienensystem einfach und kostengünstig sein.

Die voranstehende Aufgabe wird gelöst durch ein Schienensystem mit den Merkmalen des Anspruchs 1 sowie durch ein Paneel mit den Merkmalen gemäß Anspruch 11. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Schienensystem beschrieben sind, selbstverständlich auch im Zusammenhang mit dem erfindungsgemäßen Paneel und jeweils umgekehrt, so dass bezüglich der Offenbarung zu den einzelnen Erfindungsaspekten stets wechselseitig Bezug genommen wird beziehungsweise werden kann.

Das erfindungsgemäße Schienensystem dient zumindest zum Anordnen von Ladungssicherungselementen in Fahrzeugen, insbesondere Kühlfahrzeugen, wobei die Fahrzeuge zumindest ein Paneel, vorteilhaft eine Mehrzahl an Paneelen aufweisen. Das erfindungsgemäße Schienensystem weist wenigstens zwei Schienen aufweisend jeweils eine Systemfräsung zumindest mit einer sich in Schienenlängsrichtung erstreckenden hinterschnittenen Längsnut sowie ein sich zumindest abschnittweise entlang der Schienenlängsachse erstreckendes Ankerelement wenigstens zur Aufnahme von zumindest im Wesentlichen orthogonal zu einer Schienenlängsachse verlaufenden Kräften, insbesondere Querkräften, zumindest während der Nutzung von Last tragenden Ladungssicherungselementen auf. Des Weiteren weist das erfindungsgemäße Schienensystem zwei Endkappen auf, wobei jeweils eine der Endkappen an einem distalen Ende des Schienensystems, bzw. der Schienen angeordnet ist. Das erfindungsgemäße Schienensystem umfasst zudem ein sich zumindest abschnittweise entlang der Schienenlängsachse erstreckendes Ankerelement wenigstens zur Aufnahme von zumindest im Wesentlichen orthogonal zu einer Schienenlängsachse verlaufenden Kräften, insbesondere Querkräften, zumindest während der Nutzung von Last tragenden Ladungssicherungselementen. Das bedeutet, dass beispielsweise bei der Anordnung von Balken als Ladungssicherungselemente, die durch die Beladung auf die Balken wirkende Kräfte, insbesondere Querkräfte, durch das erfindungsgemäße Schienensystem, insbesondere das im Paneel eingebrachte erfindungsgenmäße Schienensystem aufgenommen werden, ohne dass das Schienensystem, insbesondere die Schiene des Schienensystems eine vordefinierte Positionierung im Paneel verlässt, insbesondere verrutscht, ausbricht usw. Entsprechendes gilt für etwaige andere Ladungssicherungselemente, wie beispielsweise Stangen oder Fittinge etc. durch welche zumindest im Wesentlichen orthogonal zur Schienenlängsachse aufgebrachte Kräfte aufgenommen werden können, ohne zu einer ungewollten Neu-Positionierung oder einem Verschieben des Schienensystems zu führen. Gemäß der vorliegenden Erfindung ist das Ankerelement ein mit den Schienen (2) einteilig bzw. einstückig verbundenes Ankerelement, welches sich zumindest abschnittweise entlang der Schienenlängsachse sowie in einer sich zur Schienenlängsachse im Wesentlichen orthogonalen Richtung sowie über beide Schienen des Schienensystems erstreckt, wobei das Ankerelement zwei Ankerabschnitte aufweist, wobei jeder Ankerabschnitt derart an der Außenseite des Schienengrundes der jeweiligen Schiene ausgebildet ist, dass zwischen den Ankerabschnitten und einer Schienengrundfläche bzw. der inneren Oberfläche eines Schienenverbindungsabschnittes ein Schaumaufnahmeraum ausgebildet ist.

Schienen, wie Airline-Schienen, Verzurrschienen oder Befestigungsscheinen etc. werden vorrangig in Nutzfahrzeugen, wie beispielsweise Lastkraftwagen, Anhängern oder Sattelaufliegern eingesetzt, um das damit zu transportierende Gut entsprechend zu sichern. Insbesondere bei sogenannten Kofferaufbauten sind zumindest die Seitenwände, Stirnwand sowie das Dach des Laderaumes durch feste Wände verschlossen. Die Rückwand wird zumeist durch sich öffnende Türen realisiert. Die Seitenwände, das Dach, die Stirnwand, der Boden und/oder die Türen sind zudem in Form von mehrschichtigen Paneelen aufgebaut. Die Paneele weisen dabei eine äußere strukturgebende Decklage sowie eine dazwischen befindliche Kernlage aus geschäumtem Kunststoff auf. Es ist auch bekannt, dass die Decklagen bei Bedarf jeweils mehrlagig ausgebildet sein können. Die Decklagen dienen der Aussteifung der Paneele und weisen folglich wenigstens eine Schicht aus einem Metall und/oder einem faserverstärkten Kunststoff auf. Die aus einem geschäumten Kunststoff bestehende Kernlage weist vorteilhaft eine hohe thermische Isolation auf, sodass die Paneele aufweisenden Kofferaufbauten insbesondere für den Transport von temperaturempfindlichen Gütern, wie beispielsweise für Kühltransporte, geeignet sind.

Es ist des Weiteren allgemein bekannt, dass Aufbauten von Nutzfahrzeugen Schienen, insbesondere Funktionsschienen bzw. Airline-Schienen aufweisen. Diese Schienen dienen vorteilhaft dazu eine Sicherung der zu transportierenden Ladung, insbesondere durch die Anordnung von Ladungssicherungselementen, zu ermöglichen. Die Schienen weisen Rastelemente, wie Öffnungen oder Bohrungen auf, die dazu dienen die Ladungssicherungselemente entsprechend anzuordnen. Ladungssicherungselemente können dabei Haken für Spanngurte, Fittinge, Nutensteine oder auch Stangen oder Balken sein. Insbesondere bei der Anordnung von Balken, wie beispielsweise den Doppelstockbalken, welche sich im Wesentlichen quer innerhalb des Laderaumes erstrecken, bedarf es der Anordnung von zwei einander gegenüberliegenden Schienen, in denen der Doppelstockbalken angeordnet werden kann. Vorteilhaft dienen die Last tragenden Doppelstockbalken beispielsweise dazu den Laderaum derart zu unterteilen, dass dieser durch ein mögliches übereinander Anordnen des Ladegutes, wobei beispielsweise eine Palette auf dem Laderaumboden platziert ist, während die darüberliegende Palette auf den sich quer durch den Laderaum erstreckenden Doppelstockbalken platziert ist, hinsichtlich dessen Ladekapazitäten optimal ausgenutzt werden kann.

Die Systemfräsung der Schiene des erfindungsgemäßen Schienensystems umfasst zumindest eine sich in Längsrichtung der Schiene erstreckende hinterschnittene Längsnut bzw. Schienenlängsnut. Diese Schienenlängsnut kann sich vollständig entlang der Schienenlängsachse, aber auch nur abschnittsweise oder in Abschnitten unterteilt entlang der Schienenlängsachse erstrecken. Es ist des Weiteren möglich, dass die Längsnut zwischen zwei Profilstreifen ausgebildet ist, wie dies beispielsweise in der DE 202 18 780 U1 gezeigt ist. Die Offenbarung dieser Schrift wird hierbei vollumfänglich zum Bestandteil der Anmeldung gemacht.

Des Weiteren weist das erfindungsgemäße Schienensystem zumindest jeweils eine an jedem distalen Ende der Schiene angeordnete Endkappe auf. Es ist denkbar, dass die Endkappen vor dem Einbringen des Schienensystems in das Paneel thermisch an die Schiene des Schienensystems gefügt werden. Die Endkappen bilden demnach den Abschluss der Schiene an beiden Seiten. Die Endkappen weisen vorteilhaft auch eine im Wesentlichen gleiche geometrische Formgebung - insbesondere ein Hinblick auf den jeweiligen Querschnitt - wie die Schiene selbst auf. Die Endkappen sind vorteilhaft derart mit der Schiene verbunden, dass ein Schaumaustritt an der Verbindungsstelle ausgeschlossen ist. Dies kann beispielsweise auch über eine geometrische Formgebung, wie eine formschlüssige Verbindung mit oder ohne Schaumbremse als auch über ein Verkleben oder das bereits benannte thermisches Fügen erfolgen.

Das Ankerelement des erfindungsgemäßen Schienensystems erstreckt sich zumindest abschnittweise entlang der Schienenlängsachse. Das bedeutet, dass das Ankerelement sich vollständig entlang der Schienenlängsachse, aber auch nur abschnittsweise oder in Abschnitten unterteilt entlang der Schienenlängsachse erstrecken kann. Das Ankerelement übernimmt bevorzugt die Funktion eines Schaumankers und überträgt insbesondere Querkräfte, die beispielsweise durch Zugbeanspruchung während des Betriebs des Fahrzeuges, insbesondere während der Ladungssicherung einer Ladung bzw. Last auftreten können. Vorteilhaft wird dank des Ankerelementes auch die im nachfolgend noch näher erläuterte Klebeverbindung der Schiene entlastet. Das Ankerelement dient vorteilhaft zum Fixieren der Schiene in definierter Position zumindest während eines Ausschäumens des Paneels. Das bedeutet, dass das Ankerelement ein prozesssicheres Anordnen der Schiene, insbesondere des gesamten Schienensystems im Paneel ermöglicht.

Gemäß einer vorteilhaften Ausführungsform erstrecken die Schienen des Schienensystems sich jeweils parallel zueinander in Schienenlängsrichtung und weisen einen Lastaufnahmeabschnitt zur Anordnung von Ladungssicherungselementen auf, wobei die Systemfräsung ausgehend von einer äußeren Oberfläche des Lastaufnahmeabschnittes ausgebildet ist. Des Weiteren umfasst die Schiene das Ankerelement selbst, sprich ohne einen Verbindungsabschnitt. Die Schiene des Schienensystems ist demnach aus unterschiedlichen Abschnitten ausgebildet. Während beispielsweise gemäß einer ersten Ausführungsform des Schienensystems der Lastaufnahmeabschnitt der Schiene dazu dient durch eine entsprechende Ausgestaltung der Systemfräsung Lasten mit Hilfe anordenbarer Ladungssicherungselemente, wie beispielsweise Fittinge, Nutensteine, Haken oder gar Stangen oder Balken, wie Doppelstockbalken, zu sichern, dient der Verbindungsabschnitt dazu sich mit dem Ankerelement zu verbinden.. Erfindungsgemäß weist das Schienensystem anstelle des Verbindungsabschnittes das Ankerelement selbst auf, beziehungsweise stellt der Verbindungsabschnitt das Ankerelement dar.

Der Lastaufnahmeabschnitt ist im Querschnitt betrachtet vorteilhaft im Wesentlichen U-förmig gestaltet. Die Schenkel der U-Form umrahmen folglich die hinterschnittene Längsnut und erstrecken sich vorteilhaft auch in eine im Wesentlichen horizontale Richtung. Das bedeutet, dass die Schenkel jeweils einen abgeknickten Bereich bzw. einen abgeknickten Abschnitt aufweisen. Die sich im Wesentlichen in horizontaler Richtung erstreckenden abgeknickten Abschnitte der U-förmigen Lastaufnahmeabschnittes weist dann eine Oberfläche und eine der Oberfläche gegenüberliegende Grundfläche auf.

Gemäß einer vorteilhaften Ausgestaltung erstrecken sich die beiden Ankerabschnitte zumindest abschnittsweise in Schienenbreitenrichtung zueinander. Vorteilhaft ist ein erstes distales Ende eines Ankerabschnittes mit dem Schienengrund bzw. Schienenlängsnutgrund der jeweiligen Schiene verbunden, wobei das zweite distale Ende des jeweiligen Ankerabschnittes in Richtung des anderen Ankerabschnittes des Ankerelementes ausgerichtet und vorteilhaft zumindest abschnittsweise freiliegend ist

Es ist des Weiteren denkbar, dass die jeweiligen Endkappen zusätzlich zu der entsprechenden Endkappenoberfläche einen Steg mit angebundenem Ausläufer für einen Ankerabschnitt aufweisen.

Erfindungsgemäß ist das Ankerelement ein mit der Schiene einteilig bzw. einstückig verbundenes Ankerelement, , welches sich zumindest abschnittweise entlang der Schienenlängsachse sowie in einer sich zur Schienenlängsachse im Wesentlichen orthogonalen Richtung erstreckt. Vorteilhafterweise ist eine separate Anordnung des Ankerelementes an die Schiene zur Erzeugung des Schienensystems hier nicht erforderlich. Vielmehr wird die Schiene mit einem entsprechenden Ankerelement gefertigt, welches sich anstelle eines Verbindungsabschnittes ausbildet oder angeformt an den Verbindungsabschnitt ausgebildet ist.

Gemäß einer vorteilhaften Ausgestaltung sind die Schienen mittels des sich zwischen den Schienen erstreckenden Schienenverbindungsabschnittes miteinander verbunden.

Es ist des Weiteren denkbar, dass die Endkappen eine Querschnittsgeometrie aufweisen, welche im Wesentlichen zumindest der Querschnittsgeometrie der Schiene entspricht, sodass die Endkappen einen Endkappenverbindungsabschnitt zum zumindest zeitweisen formschlüssigen und/oder kraftschlüssigen Wirkverbinden mit einem Ankerelement oder einen Ankerabschnitt aufweisen. Insbesondere weisen in dieser Ausführungsform des Schienensystems die Endkappen einen Endkappenverbindungsabschnitt, insbesondere Endkappenverbindungselemente auf, welcher mit den Verbindungsgegenabschnitt, insbesondere den Verbindungsgegenelementen des Ankerelementes derart verbindbar sind, dass zwischen den jeweiligen Endkappen und dem Ankerelement eine lösbare oder eine unlösbare Verbindung geschaffen werden kann. Wie oben bereits aufgeführt, wird unter einer lösbaren Verbindung im Rahmen der Erfindung eine Verbindung verstanden, bei welcher die aneinander angeordneten Elemente jederzeit zerstörungsfrei oder beschädigungsfrei voneinander entfernt werden können.

Gemäß einer Ausführungsform der Erfindung weist eine der Oberfläche des Lastaufnahmeabschnittes der Schiene abgewandte Grundfläche des Lastaufnahmeabschnittes der Schiene eine Klebenut auf, welche sich zumindest abschnittsweise entlang der Schienenlängsachse erstreckt. Vorteilhaft erstreckt sich dabei die Klebenut entlang der gesamten Schienenlängsachse oder abschnittsweise oder in Abschnitten entlang der Schienenlängsachse. Es ist denkbar, dass die Klebenut als eine Art Vertiefung, also Längsnut ausgestaltet ist, die in der Grundfläche der Schiene ausgebildet ist. Die Grundfläche der Schiene ist dabei vorteilhaft diejenige Fläche, welche eine Innendeckschicht des Paneels, in welche die Schiene bzw. das Schienensystem angeordnet wird, zumindest abschnittsweise kontaktiert.

Es ist des Weiteren denkbar, dass die Klebenut an den Grundflächen beider abgeknickter Bereiche der U-Schenkel des U-förmigen Lastaufnahmeabschnittes ausgebildet ist. Demnach würde die Schiene zwei sich im Wesentlichen zumindest abschnittsweise entlang der Schienenlängsachse erstreckende Klebenuten aufweisen.

Besonders vorteilhaft ist es denkbar, dass die jeweilige Endkappe eine Endkappenoberfläche sowie eine der Endkappenoberfläche abgewandte Endkappengrundfläche aufweist, wobei die Endkappengrundfläche eine Klebenut derart umfasst, dass bei Anordnung der Endkappen an der Schiene das Schienensystem eine im Wesentlichen umlaufende (eventuell teilweise unterbrochene umlaufende) Klebenut aufweist. Die Endkappengrundfläche ist vorteilhaft die Fläche, welche bei einer Anordnung des Schienensystems im Paneel die Innendeckschicht des Paneels zumindest abschnittsweise kontaktiert. Demzufolge kontaktiert ein in die Klebenut eingebrachtes Klebemittel bzw. Haftmittel die Innendeckschicht des Paneels zumindest abschnittsweise. Die Verwendung eines Klebemittels sorgt vorteilhaft für eine zumindest zeitweise und vorteilhaft auch zumindest abschnittsweise unlösbare Verbindung zwischen dem Schienensystem, insbesondere der Schiene des Schienensystems und dem Paneel, insbesondere der Innendeckschicht des Paneels bzw. Teilbereichen der Innendeckschicht des Paneels. Die Teilbereiche der Innendeckschicht des Paneels sind dabei vorteilhaft zumindest abschnittsweise verformte Prägebereiche oder Prägeflächen. Mit Hilfe der Klebeverbindung zwischen Paneel und Schiene wird das Schienensystem zumindest zweitweise während des Ausschäumens des Paneels an einer gewünschten Position gehalten. Der Ausschäumprozess wird erst dann gestartet, wenn der Klebstoff die Schiene mit der Innendeckschicht verschiebefrei verbunden hat. Dadurch wird unter anderem auch ein Verschieben des Schienensystems, insbesondere der Schiene des Schienensystems, zumindest während des Prozesses des Ausschäumens des Paneels verhindert.

In einer vorteilhaften Ausführungsform ist es möglich, dass die Systemfräsung eine Vielzahl von Positionsbereichen, welche auch als Rastausnehmungen bezeichnet werden können, aufweist. Diese Positionsbereiche sind vorteilhaft als entlang der Schienenlängsachse gleichmäßig zueinander beabstandete Bohrungen in der Oberfläche der Schiene im Bereich der hinterschnittenen Längsnut ausgebildet. Demnach sind die Positionsbereiche bei einer Draufsicht auf die Schiene des Schienensystems sichtbare Bereiche. Alternativ ist es möglich, dass die Positionsbereiche als innerhalb der hinterschnittenen Längsnut im Bereich einer der Oberfläche der Schiene gegenüberliegenden Hinterschnittfläche ausgebildete entlang der Schienenlängsachse gleichmäßig zueinander beabstandete Sacklochfräsungen ausgebildet sind. In diesem Fall sind die Positionsbereiche bei einer Draufsicht auf die Schiene des Schienensystems nicht sichtbar. In beiden Alternativen dienen die Positionsbereiche jedoch dazu die anzuordnenden Lastaufnahmeelemente in einer definierten Position entlang der Schienenlängsachse zu fixieren. Hierfür können entsprechende Gegenelemente in die Positionsbereiche eingreifen.

Es ist des Weiteren ein Paneel mit einem Schienensystem gemäß der vorgenannten Art beansprucht. Erfindungsgemäß weist das Paneel wenigstens eine Innendeckschicht, eine Außendeckschicht sowie zwischen der Innendeckschicht und der Außendeckschicht befindlichen Schaum, insbesondere Polyurethan-Schaum auf. Vorteilhaft ist das Schienensystem derart innerhalb des Paneels angeordnet ist, dass die Schiene des Schienensystems zumindest nach dem Ausschäumen des Paneels bündig, das bedeutet insbesondere ohne Überstand, in der Innendeckschicht des Paneels angeordnet ist. Bei Angeordnetem und eingeschäumtem Schienensystem nimmt das Ankerelement des Schienensystems vorteilhaft zumindest im Wesentlichen orthogonal zur Schienenlängsachse verlaufende Kräfte, insbesondere Querkräfte, zumindest während der Nutzung von Last tragenden Ladungssicherungselementen auf. Dadurch wird vorteilhaft ein ungewolltes Verschieben des Schienensystems im Paneel bei Nutzung während einer Ladungssicherung vermieden. Des bedeutet, dass das Ankerelement für eine feste Fixierung der Schiene am Paneel auch während der Anordnung der Lastaufnahmeelemente sowie während der Befestigung und Fixierung der Ladung mittels der in der Schiene des Schienensystems fixierten Lastaufnahmeelementen dient.

Vorteilhaft ist durch die Ausgestaltung des Schienensystems die Schiene des Schienensystems, insbesondere der Lastaufnahmeabschnitt der Schiene, derart dünnwandig ausgestaltet, dass eine tiefe bzw. starke Prägung der Innendeckschicht des Paneels zur Erzeugung einer Schienenaufnahmeöffnung nicht erforderlich ist. Vielmehr muss die Innendeckschicht lediglich in den längsverlaufenden Flanschbereichen der Schiene sowie an den jeweiligen Enden der Endkappen nur minimal geprägt werden. Unter einer minimalen Prägung wird im Rahmen der Erfindung eine Prägung von weniger als 5mm, vorteilhaft von weniger als 4 mm und besonders vorteilhaft von weniger als 3mm (Prägetiefe) verstanden. Dadurch wird vorteilhaft ein Einreißen der Kanten der Prägungen vermieden, wodurch auch ein ungewolltes Austreten des einzuschäumenden Schaumes zumindest während des Ausschaumvorganges verhindert wird.

Bei dem beschriebenen Paneel ergeben sich sämtliche Vorteile, die bereits zu einem Schienensystem gemäß dem ersten Aspekt der Erfindung beschrieben worden sind.

Es ist des Weiteren ein Verfahren zum Herstellen eines oben genannten Paneels aufgezeigt, welches wenigstens die folgenden Schritte aufweist:
- Prägung der Innendeckschicht des Paneels ohne Freischnitt an den Außenkanten der Prägung zur Erzeugung einer Schienenaufnahmeöffnung,
- Anordnen des Schienensystems in der Schienenaufnahmeöffnung sowie in einem zwischen Innendeckschicht und Außendeckschicht befindlichen Hohlraum derart, dass die Oberfläche der Schiene des Schienensystems bündig mit einer nicht geprägten Innendeckschichtoberfläche verläuft,
- Ausschäumen des Hohlraums mit einem Schaum, insbesondere einem PU-Schaum.

Ergänzende Schritte zum Verfahren sind hierbei beispielsweise:
- schaumdichtes Verbinden der Endkappen mit den distalen Enden der Schiene über eine geometrische Lösung, die eine in den Endkappen integrierte Schaumbremse ausweist oder thermisches Fügen der Endkappen an die distalen Enden der Schiene, insbesondere an die distalen Enden des Lastaufnahmeabschnittes der Schiene zeitlich bevor die Schiene bzw. das Schienensystem in die Schienenaufnahmeöffnung des Paneels eingebracht wird, wobei das Verbinden der Schiene mit dem Ankerelement zeitlich vor oder nach dem Anordnen der Endkappen an der Schiene erfolgen kann und/oder - Aufbringung eines Klebemittels in die Klebenut der Schiene sowie der Endkappen zeitlich bevor die Schiene bzw. das Schienensystem in die Schienenaufnahmeöffnung des Paneels eingebracht wird und/oder
- Festkleben der Schiene des Schienensystems sowie der mit der Schiene verbundenen Endkappen an einen geprägten bzw. gebogenen Abschnitt der Innendeckschicht des Paneels zeitlich nachdem das Schienensystem in der Schienenaufnahmeöffnung sowie in einem zwischen Innendeckschicht und Außendeckschicht befindlichen Zwischenraum angeordnet ist.

Bei dem beschriebenen Verfahren ergeben sich sämtliche Vorteile, die bereits zu einem Schienensystem gemäß dem ersten Aspekt der Erfindung beschrieben worden sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein erfindungsgemäßes Schienensystem sowie ein Paneel mit erfindungsgemäßem Schienensystem werden nachfolgend anhand von Zeichnungen näher erläutert. Es zeigen jeweils schematisch:
- Figur 1: in einer Draufsicht eine Ausführungsform des erfindungsgemäßen Schienensystems,
- Figur 2: in einer Untersicht die Unterseite der in der Figur 1 gezeigten Ausführungsform des erfindungsgemäßen Schienensystems,
- Figur 3: in einer seitlichen Schnittdarstellung die in den Figuren 1 und 2 gezeigte Ausführungsform des erfindungsgemäßen Schienensystems angeordnet in einem Paneel,
- Figur 4: in einer vergrößerten Ansicht den Ausschnitt D der Figur 3
- Figur 5: in einer Draufsicht eine Ausführungsform einer Innendeckschicht mit geprägten Wandungen eines Paneels und
- Figur 6: in einer perspektivischen Ansicht ein Abschnitt der in der Figur 5 gezeigte Ausführungsform einer Innendeckschicht.

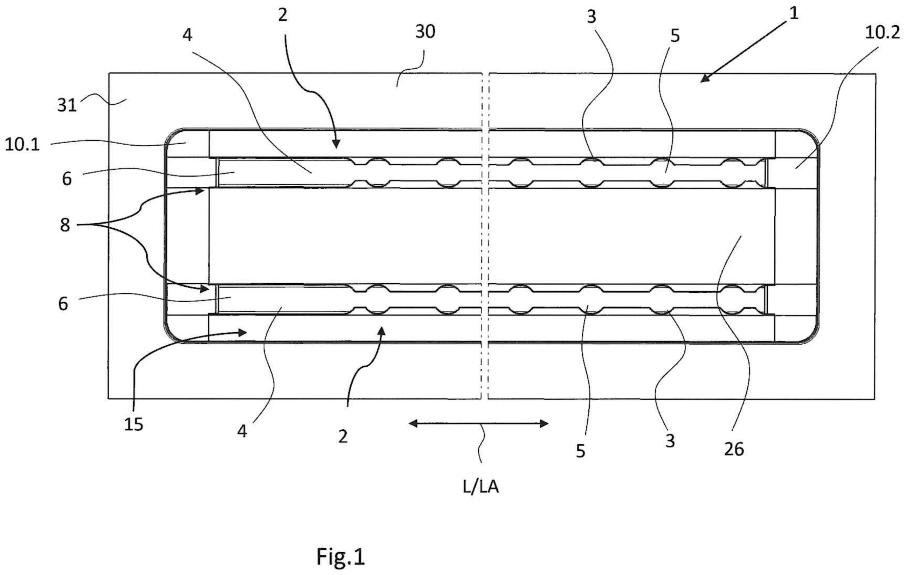

Elemente mit gleicher Funktion und Wirkungsweise sind in den Figuren 1 bis 6 jeweils mit denselben Bezugszeichen versehen.

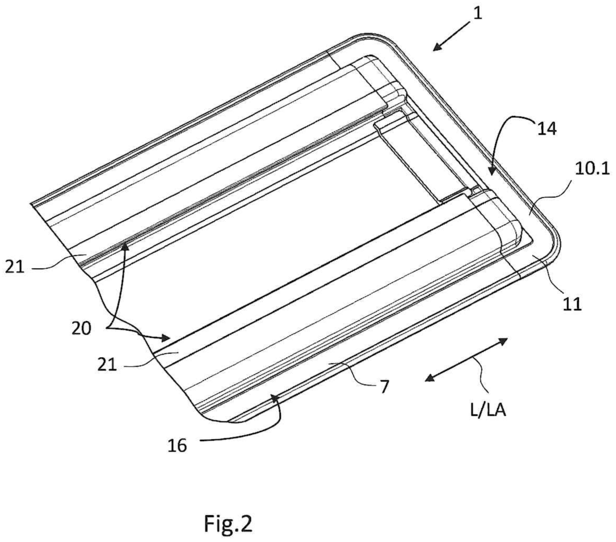

In den Figuren 1 bis 4 ist eine Ausführungsform eines erfindungsgemäßen Schienensystems 1 gezeigt. Dabei ist in der Figur 1 die Draufsicht, also die Ansicht auf die Oberfläche 15 des Schienensystems 1 bzw. der Schienen 2 des Schienensystems 1 und in der Figur 2 in der Untersicht die Unterseite des Schienensystems 1 dargestellt. Wie in der Figur 1 gezeigt, weist das Schienensystem 1 zwei Schienen 2 auf, welche sich jeweils parallel zueinander beabstandet in Schienenlängsrichtung L erstrecken. Beide Schienen 2 sind mittels eines sich zwischen den Schienen 2 erstreckenden Schienenverbindungsabschnittes 26 miteinander verbunden. Der Schienenverbindungsabschnitt 26 ist dabei vorteilhaft eine Wandung oder eine Schicht, die sich zumindest abschnittsweise zwischen den beiden Schienen 2 in Schienenlängsrichtung erstreckt und beide Schienen 2 miteinander verbindet. Beide Schienen 2 weisen jeweils eine Systemfräsung 3 auf, welche sich als eine in Schienenlängsrichtung L erstreckende hinterschnittene Schienenlängsnut 4 sowie in regelmäßigen Abständen in Schienenlängsrichtung L entlang der Schienenlängsnut 4 verteilten Positionsbereichen 5 ausbildet. Die Positionsbereiche 5 sind vorteilhaft als Bohrungen ausgestaltet. Es ist des Weiteren denkbar, dass die jeweilige Systemfräsung 3 der Schienen 2 auch einen jeweiligen Einführbereich 6 aufweisen. Der Einführbereich 6 dient vorteilhaft dazu hier nicht gezeigte Lastaufnahmeelemente in die Schienenlängsnut 4 einzubringen. Die Positionsbereiche 5 dienen dann vorteilhaft dazu das Lastaufnahmeelement in einer definierten Position entlang der Schienenlängsnut 4 zu positionieren und ein ungewolltes Verschieben / Bewegen des Lastaufnahmeelementes in der Schienenlängsnut 4 entlang der Schienenlängsrichtung L zu vermeiden. Des Weiteren zeigt sich in der Figur 1 ein Lastaufnahmeabschnitt 8, welcher derjenige Abschnitt der Schienen 2 ist, welcher zumindest die Systemfräsung 3 aufweist. Das in der Figur 1 gezeigte Schienensystem 1 ist in einer Innendeckschicht 31 eines hier nicht vollständig gezeigten Paneels 30 angeordnet. Des Weiteren weist das Schienensystem 1 zwei Endkappen 10.1, 10.2 auf. Jeweils eine der Endkappen 10.1, 10.2 ist an einem distalen Ende des Schienensystems 1, bzw. der Schienen 2 angeordnet. Vorteilhaft sind die Endkappen 10.1, 10.2 Bestandteile des Schienensystems 1. Somit weisen beide Schienen 2 eine gemeinsame erste Endkappe 10.1 sowie eine gemeinsame zweite Endkappe 10.2 auf. Die Endkappen 10.1, 10.2 sind geometrisch den Schienen 2 und deren Ausgestaltung angepasst.

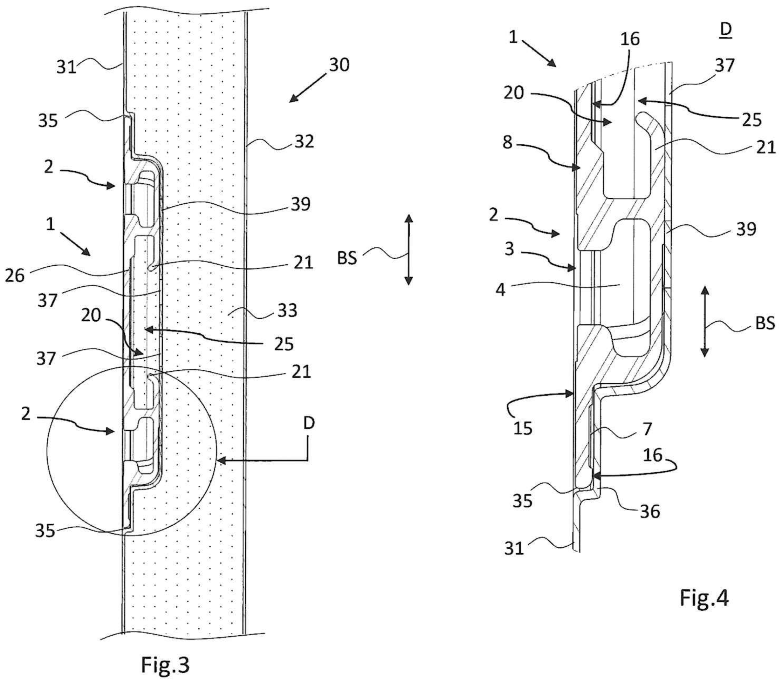

In der Figur 2 ist die Unterseite des in der Figur 1 gezeigten Schienensystems 1, insbesondere eines Abschnittes des Schienensystems 1 gezeigt. Das Schienensystem 1 weist ein Ankerelement 20 auf. Das Ankerelement 20 des Schienensystems 1 erstreckt sich über beide Schienen 2 des Schienensystems 1. Das Ankerelement 20 weist zwei Ankerabschnitte 21 auf. Die Ankerabschnitte 21 erstrecken sich vorteilhaft im Wesentlichen parallel zueinander in Schienenlängsrichtung L in Gestalt einer Lippe, eines Vorsprunges, einer hinterschnittenen Wandung, einer Vertiefung oder in vergleichbarer Ausgestaltung. Die detaillierte Ausgestaltung des Ankerelementes 20, insbesondere der Ankerabschnitte 21 des Ankerelementes wird in der Figurenbeschreibung zu den Figuren 3 und 4 genauer beschrieben. Des Weiteren ist in der Figur 2 die Klebenut 7 der Schienen 2 sowie die Klebenut 11 der Endkappen 10.1, welche insbesondere in einer C-Form ausgebildet ist, beispielhaft gezeigt. Vorteilhaft bildet die Endkappenklebenut 11 beim Anordnen der Endkappen 10.1, 10.2 an der Schiene 2 eine mit der Schienenklebenut 7 umlaufende (gemeinsame) Klebenut, welche umlaufend um das Schienensystem 1 verläuft. Die Klebenut 7 der Schienen 2 ist auf der Schienengrundfläche 16 ausgebildet, während die Klebenut 11 der Endkappen 10.1 auf der Endkappengrundfläche 14 ausgebildet ist. Die Klebenuten 7 und 11 sind dabei vorteilhaft in Gestalt von Vertiefungen, Nuten, Rillen oder in vergleichbarer geometrischer Gestalt ausgebildet.

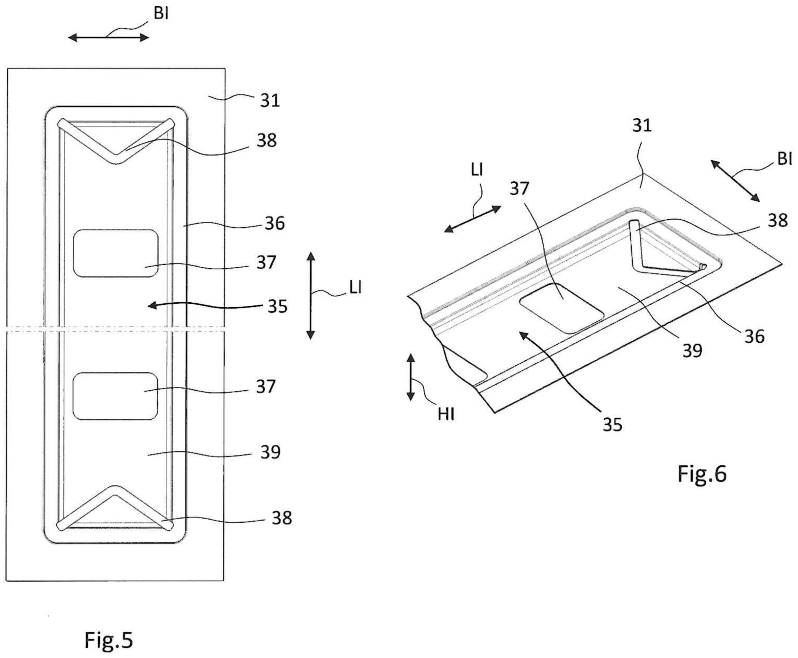

In der Figur 3 ist in einer seitlichen Schnittdarstellung die in den Figuren 1 und 2 gezeigte Ausführungsform des erfindungsgemäßen Schienensystems 1 angeordnet in einem Paneel 30 gezeigt. Das Paneel 30 ist in der Figur 3 lediglich abschnittsweise dargestellt. In der Figur 4 ist in einer vergrößerten Ansicht der Ausschnitt D der Figur 3 gezeigt. Beide Figuren 3 und 4 werden nachfolgend gemeinsam beschrieben. Wie bereits in der Figurenbeschreibung zu der Figur 1 aufgeführt, weist das Schienensystem 1 zwei Schienen 2 mit jeweils einer Systemfräsung 3 bzw. einer Schienenlängsnut 4 auf. Beide Schienen 2 sind mittels eines sich zwischen den Schienen 2 erstreckenden Schienenverbindungsabschnittes 26 miteinander verbunden. Der Schienenverbindungsabschnitt 26 ist dabei vorteilhaft eine Wandung oder eine Schicht, die sich zumindest abschnittsweise zwischen den beiden Schienen 2 in Schienenlängsrichtung erstreckt und beide Schienen 2 miteinander verbindet. Das Schienensystem 1 weist einen Lastaufnahmeabschnitt 8 auf. Der Lastaufnahmeabschnitt 8 ist dabei derjenige Abschnitt der Schiene 2, welcher zumindest die Systemfräsung 3 bzw. die Schienenlängsnut 4 umfasst. Das Schienensystem 1 ist in einer Schienenaufnahmeöffnung 35 der Innendeckschicht 31 des Paneels 30 angeordnet. Die Schienenaufnahmeöffnung 35 ist hierbei vorteilhaft eine Vertiefung, insbesondere eine konkave, nach innen gerichtete Wölbung bzw. Wanne Die Schienenaufnahmeöffnung 35 weist vorteilhaft eine geprägte (umlaufende) Wandung 36 sowie einen sich zwischen der geprägten Wandung erstreckenden Innendeckschichtabschnitt 39 auf. Vorteilhaft wird die wenigstens eine Schienenaufnahmeöffnung 35 beispielsweise durch Prägung ausgebildet. In diese Schienenaufnahmeöffnung 35 wird das Schienensystem 1 derart eingesetzt, dass die Oberfläche 15 des Lastaufnahmeabschnittes 8 der Schienen 2 im Wesentlichen zumindest abschnittsweise plan zur Oberfläche der Innendeckschicht 31 positioniert ist. Die geprägte Wandung 36 der Innendeckschicht 31 ist dabei derart geprägt bzw. verformt, dass diese zumindest abschnittsweise an der Schienengrundfläche 16 anliegt. Die Ausgestaltung dieser Innendeckschicht 31 ist in den nachfolgenden Figuren 5 und 6 gezeigt und wird in der dazugehörigen Figurenbeschreibung noch genauer erläutert. Das Paneel 30 weist, wie insbesondere in der Figur 3 gezeigt, zumindest die genannte Innendeckschicht 31, eine Außendeckschicht 32 sowie einen zumindest zwischen der Innendeckschicht 31 und der Außendeckschicht 32 ausgebildeten Zwischenraum 33 auf. Dieser Zwischenraum 33 ist mit Schaum 34, insbesondere PU-Schaum 34 ausgefüllt. Der Schaum 34 erstreckt sich dabei zumindest teilweise durch zumindest eine, vorteilhaft zumindest zwei Durchlassöffnungen 37 der Innendeckschicht 31, insbesondere des im Bereich der Schienenaufnahmeöffnung 35 zwischen den geprägten Wandungen 36 ausgebildeten Innendeckschichtabschnittes 39 bis in den Bereich des Ankerelementes 20, insbesondere bis in einem Schaumaufnahmeraum 25 hinein. Das Ankerelement 20 weist zwei Ankerabschnitte 21 auf. Jeder Ankerabschnitt 21 ist in einem Bereich einer der Schienen 2 des Schienensystems 1, insbesondere an der Außenseite des Schienengrundes der jeweiligen Schiene 2 ausgebildet. Vorteilhaft erstrecken sich beide Ankerabschnitte 21 zumindest abschnittsweise in Schienenbreitenrichtung BS zueinander. Zwischen den Ankerabschnitten 21 und der Schienengrundfläche 16 bzw. der inneren Oberfläche des Schienenverbindungsabschnittes 26 wird somit ein Schaumaufnahmeraum 25 ausgebildet. Der Schaumaufnahmeraum 25 ist folglich ein vom Schienensystem 1 geschaffener Raum, in welchem Schaum 34 aufgenommen ist bzw. wird. Der Schaumaufnahmeraum 25 liegt folglich außerhalb des Zwischenraums 33 des Paneels 30. Vorteilhaft ist der Schaumaufnahmeraum 25 im Bereich der Schienenaufnahmeöffnung 35 ausgebildet. Ein Austritt des Schaums 34 aus dem Schaumaufnahmeraum 25 nach Außen (also außerhalb des Paneels 30 und des Schienensystems 1) wird vorteilhaft zum einen durch das zumindest abschnittsweise Anliegen der Ankerabschnitte 21 an dem Innendeckschichtabschnitt 39 sowie durch die Klebung in der umlaufenden Schienenklebenut 7 bzw. Endkappenklebenut 11 verhindert. Die Ankerabschnitte 21 sind vorteilhaft in Gestalt einer sich zumindest abschnittsweise entlang der Schienenlängsrichtung erstreckenden Lippe oder eines entsprechenden Vorsprunges ausgebildet. Die Ankerabschnitte 21 erstrecken sich dabei zumindest abschnittsweise in Schienenlängsrichtung sowie in Schienenbreitenrichtung BS. Vorteilhaft erstrecken sich die beiden Ankerabschnitte 21 zumindest abschnittsweise parallel zum Schienenverbindungsabschnitt 26. Ein erstes distales Ende eines Ankerabschnittes 21 ist mit dem Schienengrund bzw. Schienenlängsnutgrund der jeweiligen Schiene 2 verbunden. Das zweite distale Ende des jeweiligen Ankerabschnittes 21 ist in Richtung des anderen Ankerabschnittes 21 des Ankerelementes 20 ausgerichtet und vorteilhaft zumindest abschnittsweise freiliegend. Es ist denkbar, dass dieses zweite distale Ende des jeweiligen Ankerabschnittes 21 zumindest abschnittsweise eine gebogene Form/Gestalt aufweist. Dabei ist es möglich, dass das zweite distale Ende des jeweiligen Ankerabschnittes 21 zumindest abschnittsweise in Richtung des Schienenverbindungsabschnittes 26 gebogen bzw. geformt ist. Es sind jedoch auch andere Ausgestaltungen der Ankerabschnitte 21 mit abweichender Biegung oder Formung denkbar. So sind beispielsweise C-förmige, I-förmige, L-förmige oder auch T-förmige oder Y-förmige (mit zwei zweiten distalen Enden) usw. ausgebildete Ankerabschnitte 21 denkbar.

In den Figuren 5 und 6 ist eine Ausführungsform einer Innendeckschicht 31 eines Paneels gezeigt. Dabei zeigt die Figur 5 in einer Draufsicht eine Oberseite der Innendeckschicht 31 und die Figur 6 in einer perspektivischen Ansicht einen Abschnitt der in der Figur 5 gezeigte Ausführungsform der Innendeckschicht 31. Die Innendeckschicht 31 weist eine Schienenaufnahmeöffnung 35 auf, welche, wie bereits zuvor beschrieben, vorteilhaft eine Vertiefung, insbesondere eine konkave, nach innen gerichtete Wölbung bzw. Wanne darstellt. Die Schienenaufnahmeöffnung 35 weist vorteilhaft eine geprägte (umlaufende) Wandung 36 sowie einen sich zwischen der geprägten Wandung 36 erstreckenden Innendeckschichtabschnitt 39 auf. Im Innendeckschichtabschnitt 39 ist zumindest eine Durchlassöffnung 37, vorteilhaft sind zumindest zwei Durchlassöffnungen 37 ausgebildet. Diese wenigstens eine Durchlassöffnung 37 ermöglicht den Durchtritt bzw. Durchfluss des in den Zwischenraum des hier nicht gezeigten Paneels eingebrachten Schaums in den Schaumaufnahmeraum 25 des Schienensystems 1, wie beispielsweise in der Figur 3 gezeigt. Die geometrische Form der wenigstens einen Durchlassöffnung 37 kann dabei unterschiedlich ausgeführt sein. Es sind rechteckige, quadratische, vieleckige oder auch runde oder ovale Ausgestaltungen denkbar. Die wenigstens eine Durchlassöffnung 37 ist vorteilhaft in Gestalt eines Lochs, einer Ausnehmung, einer Aussparung oder in vergleichbarer Gestalt ausgebildet. Des Weiteren ist vorteilhaft auch zumindest eine Multifunktionsöffnung 38, besonders vorteilhaft zumindest zwei Multifunktionsöffnungen 38 ausgebildet. Die wenigstens eine Multifunktionsöffnung 38 erstreckt sich dabei vorteilhaft ausgehend von der geprägten Wandung 36 bis zum Innendeckschichtabschnitt 39. Es ist denkbar, dass die wenigstens eine Multifunktionsöffnung 38 eine V-förmige oder U-förmige Gestalt oder eine vergleichbare Gestalt aufweist. Dabei ist es vorteilhaft möglich, dass die beiden Enden der V-Schenkel bzw. der U-Schenkel in einem Abschnitt der geprägten Wandung 36 enden, während die V-Spitze bzw. der U-Bogen im Bereich des Innendeckschichtabschnittes 39 ausgebildet ist. Es sind jedoch auch andere Ausgestaltungen der Multifunktionsöffnung 39 denkbar, sodass diese nicht auf die hier genannte Ausgestaltung eingeschränkt ist. Vorteilhaft erstreckt sich die mindesten eine Multifunktionsöffnung 38 zumindest abschnittsweise in Innendeckschichtlängsrichtung LI sowie zumindest abschnittsweise in Innendeckschichtbreitenrichtung BI. Bei der Erstreckung eines Abschnittes der Multifunktionsöffnung 39 im Bereich der geprägten Wandung 36 erstreckt sich die Multifunktionsöffnung 39, insbesondere der im Bereich der geprägten Wandung 36 ausgebildete Abschnitt der Multifunktionsöffnung 39, zumindest auch abschnittsweise in Innendeckschichthöhenrichtung HI. Vorteilhaft ist ein Abschnitt der Multifunktionsöffnung 39, insbesondere ein distaler Abschnitt der Multifunktionsöffnung 39, im Bereich einer Ecke der geprägten Wandung 36 ausgebildet. Besonders vorteilhaft weist die Multifunktionsöffnung 39 zwei Abschnitte, insbesondere zwei distale Enden auf, wobei jedes dieser Enden in einer anderen Ecke, insbesondere zweier benachbart zueinander ausgeprägter Ecken, der geprägten Wandung 36 ausgebildet ist. Vorteilhaft erstreckt sich die Multifunktionsöffnung 39 in Innendeckschichtbreitenrichtung BI von einer Ecke der geprägten Wandung 36 bis zur benachbart gelegenen andere Ecke der geprägten Wandung 36. Vorteilhaft dient die Multifunktionsöffnung dazu zum einen Durchtritt bzw. Durchfluss des in den Zwischenraum des hier nicht gezeigten Paneels eingebrachten Schaums in den Schaumaufnahmeraum 25 des Schienensystems 1, wie beispielsweise in der Figur 3 gezeigt, zu ermöglichen. Zum anderen dient die Multifunktionsöffnung 39 dazu ein ungewolltes Einreißen der Ecken bzw. der Kanten der geprägten Wandung 36 und/oder eine ungewollte Materialverschiebung insbesondere beim Prägeprozess zu verhindern. Hierdurch wird eine prozesssichere und definierte Prägung der geprägten Wandung 36 und folglich eine fehlerfreie Erzeugung der Innendeckschicht 31 ermöglicht.

## Patentansprüche

1. Schienensystem (1) zumindest zum Anordnen von Ladungssicherungselementen in Fahrzeugen, insbesondere Kühlfahrzeugen, wobei die Fahrzeuge zumindest ein Paneel (30) aufweisen,
wobei das Schienensystem (1) wenigstens zwei Schienen (2) aufweisend jeweils eine Systemfräsung (3) zumindest mit einer sich in Schienenlängsrichtung (L) erstreckenden hinterschnittenen Schienenlängsnut (4),
sowie ein sich zumindest abschnittweise entlang der Schienenlängsachse (L) erstreckendes Ankerelement (20) wenigstens zur Aufnahme von zumindest im Wesentlichen orthogonal zu einer Schienenlängsachse (L) verlaufenden Kräften, insbesondere Querkräften, zumindest während der Nutzung von Last tragenden Ladungssicherungselementen aufweist,
**dadurch gekennzeichnet, dass**
das Schienensystem (1) zwei Endkappen (10.1, 10.2) aufweist, wobei jeweils eine der Endkappen (10.1, 10.2) an einem distalen Ende des Schienensystems (1), bzw. der Schienen (2) angeordnet ist und das Ankerelement (20) ein mit den Schienen (2) einteilig bzw. einstückig verbundenes Ankerelement (20) ist, welches sich zumindest abschnittweise entlang der Schienenlängsachse (L) sowie in einer sich zur Schienenlängsachse (L) im Wesentlichen orthogonalen Richtung sowie über beide Schienen (2) des Schienensystems (1) erstreckt, wobei das Ankerelement (20) zwei Ankerabschnitte (21) aufweist, wobei jeder Ankerabschnitt (21) derart an der Außenseite des Schienengrundes der jeweiligen Schiene (2) ausgebildet ist, dass zwischen den Ankerabschnitten (21) und einer Schienengrundfläche (16) bzw. der inneren Oberfläche eines Schienenverbindungsabschnittes (26) ein Schaumaufnahmeraum (25) ausgebildet ist.

2. Schienensystem (1) gemäß Anspruch 1,
**dadurch gekennzeichnet, dass**
die Schienen (2) sich jeweils parallel zueinander beabstandet in Schienenlängsrichtung (L) erstrecken und jeweils einen Lastaufnahmeabschnitt (8) zur Anordnung von Ladungssicherungselementen aufweisen, wobei die Systemfräsung (3) ausgehend von einer äußeren Oberfläche des Lastaufnahmeabschnittes (8) ausgebildet ist, und dass die Schienen (2) des Weiteren das Ankerelement (20) umfassen.

3. Schienensystem (1) gemäß einem der vorangegangenen Ansprüche,
**dadurch gekennzeichnet, dass**
sich beide Ankerabschnitte (21) zumindest abschnittsweise in Schienenbreitenrichtung (BS) zueinander erstrecken.

4. Schienensystem (1) gemäß einem der vorangegangenen Ansprüche,
**dadurch gekennzeichnet, dass**
die jeweiligen Endkappen (10.1, 10.2) zusätzlich zu der entsprechenden Endkappenoberfläche (13) einen Steg (19) mit angebundenem Ausläufer für einen Ankerabschnitt (21) aufweisen.

5. Schienensystem (1) gemäß einem der der vorangegangenen Ansprüche,
**dadurch gekennzeichnet, dass**
die Schienen (2) mittels des sich zwischen den Schienen (2) erstreckenden Schienenverbindungsabschnittes (26) miteinander verbunden sind.

6. Schienensystem (1) gemäß einem der der vorangegangenen Ansprüche,
**dadurch gekennzeichnet, dass**
ein erstes distales Ende eines Ankerabschnittes (21) mit dem Schienengrund bzw. Schienenlängsnutgrund der jeweiligen Schiene (2) verbunden ist, wobei das zweite distale Ende des jeweiligen Ankerabschnittes (21) in Richtung des anderen Ankerabschnittes (21) des Ankerelementes (20) ausgerichtet und vorteilhaft zumindest abschnittsweise freiliegend ist.

7. Schienensystem (1) gemäß einem der vorangegangenen Ansprüche,
**dadurch gekennzeichnet, dass**
die Endkappen (10.1, 10.2) eine Querschnittsgeometrie aufweisen, welche im Wesentlichen zumindest der Querschnittsgeometrie der Schiene (2) entspricht, sodass die Endkappen (10.1, 10.2) einen Endkappenverbindungsabschnitt (12) zum zumindest zeitweisen formschlüssigen und/oder kraftschlüssigen Wirkverbinden mit einem Ankerelement (20) oder einen Ankerabschnitt (21) aufweisen.

8. Schienensystem (1) gemäß einem der vorangegangenen Ansprüche 2 bis 7, **dadurch gekennzeichnet, dass**
eine der Oberfläche des Lastaufnahmeabschnittes (8) der Schiene (2) abgewandte Grundfläche des Lastaufnahmeabschnittes (8) der Schiene (2) eine Klebenut (7) aufweist, welche sich zumindest abschnittsweise entlang der Schienenlängsachse (L) erstreckt.

9. Schienensystem (1) gemäß Anspruch 8,
**dadurch gekennzeichnet, dass**
die jeweilige Endkappe (10.1, 10.2) eine Endkappenoberfläche (13) sowie eine der Endkappenoberfläche (13) abgewandte Endkappengrundfläche (14) aufweist, wobei die Endkappengrundfläche (14) eine Klebenut (11) derart umfasst, dass bei Anordnung der Endkappen (10.1, 10.2) an der Schiene (2) das Schienensystem (1) eine umlaufende Klebenut aufweist.

10. Schienensystem (1) gemäß einem der vorangegangenen Ansprüche,
**dadurch gekennzeichnet, dass**
die Systemfräsung (3) eine Vielzahl von Positionsbereichen (5) aufweist, welche als entlang der Schienenlängsachse (L) gleichmäßig zueinander beabstandete Bohrungen in der Oberfläche (15) der Schiene (2) im Bereich der hinterschnittenen Schienenlängsnut (4) oder als innerhalb der hinterschnittenen Schienenlängsnut (4) im Bereich einer der Oberfläche (15) der Schiene (2) gegenüberliegenden Hinterschnittfläche ausgebildete entlang der Schienenlängsachse (L) gleichmäßig zueinander beabstandete Sacklochfräsungen ausgebildet sind.

11. Paneel (30) mit einem Schienensystem (1) gemäß einem der vorangegangenen Ansprüche 1 bis 10,
**dadurch gekennzeichnet, dass**
das Paneel (30) wenigstens eine Innendeckschicht (31), eine Außendeckschicht (31) sowie zwischen der Innendeckschicht (31) und der Außendeckschicht (31) befindlichen Schaum (34), insbesondere Polyurethan-Schaum aufweist, und dass das Schienensystem (1) derart innerhalb des Paneels (30) angeordnet ist, dass die Schiene (2) des Schienensystems (1) zumindest nach dem Ausschäumen des Paneels (30) bündig in der Innendeckschicht (31) des Paneels (30) angeordnet ist, wobei das Ankerelement (20) des Schienensystems (1) zumindest im Wesentlichen orthogonal zur Schienenlängsachse (L) verlaufende Kräfte, insbesondere Querkräfte, zumindest während der Nutzung von Last tragenden Ladungssicherungen aufnimmt.
